(19) **Europäisches Patentamt / European Patent Office / Office européen des brevets**

(11) **EP 1 834 863 B1**

(12) **EUROPEAN PATENT SPECIFICATION**

(45) Date of publication and mention
of the grant of the patent:
**05.01.2011 Bulletin 2011/01**

(21) Application number: **05809110.9**

(22) Date of filing: **24.11.2005**

(51) Int Cl.:
**B62D 55/21** *(2006.01)* **B62D 55/205** *(2006.01)*

(86) International application number:
**PCT/JP2005/021553**

(87) International publication number:
**WO 2006/064644 (22.06.2006 Gazette 2006/25)**

(54) **LINK STRUCTURE BODIES FOR TRACK BELT AND LINK CHAIN FORMED BY CONNECTING THE LINK STRUCTURE BODIES**

KETTENGLIEDSTRUKTURKÖRPER FÜR RAUPENBAND UND DURCH VERBINDUNG DER KETTENGLIEDSTRUKTURKÖRPER HERGESTELLTE GLIEDERKETTE

CORPS A STRUCTURES DE MAILLONS POUR COURROIE PORTEUSE ET CHAÎNE A MAILLONS FORMEE PAR LE RACCORDEMENT DES CORPS A STRUCTURES DE MAILLONS

(84) Designated Contracting States:
**IT**

(30) Priority: **15.12.2004 JP 2004363473**

(43) Date of publication of application:
**19.09.2007 Bulletin 2007/38**

(73) Proprietor: **KOMATSU LTD.**
**Minato-ku,**
**Tokyo 107-8414 (JP)**

(72) Inventor: **HISAMATSU, Kenichi,**
**c/o KOMATSU LTD. Osaka Plant**
**Hirakata-shi, Osaka 5731011 (JP)**

(74) Representative: **Kastel, Stefan et al**
**Flügel Preissner Kastel Schober**
**Patentanwälte**
**Postfach 31 02 03**
**80102 München (DE)**

(56) References cited:
| | |
|---|---|
| **EP-A- 1 249 384** | **DE-A1- 10 113 995** |
| **DE-A1- 10 141 826** | **JP-A- 9 290 778** |
| **JP-A- 09 290 778** | **JP-A- 2003 220 983** |
| **JP-B2- 3 265 552** | **JP-U- 47 017 333** |
| **JP-U- 47 017 334** | **JP-Y2- 55 052 488** |
| **JP-Y2- 58 053 273** | **JP-Y2- 59 008 947** |
| **US-A1- 2003 141 760** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a crawler belt link structure according to the precharacterising part of enclosed claim 1, and a crawler belt link chain formed by coupling the same.

BACKGROUND ART

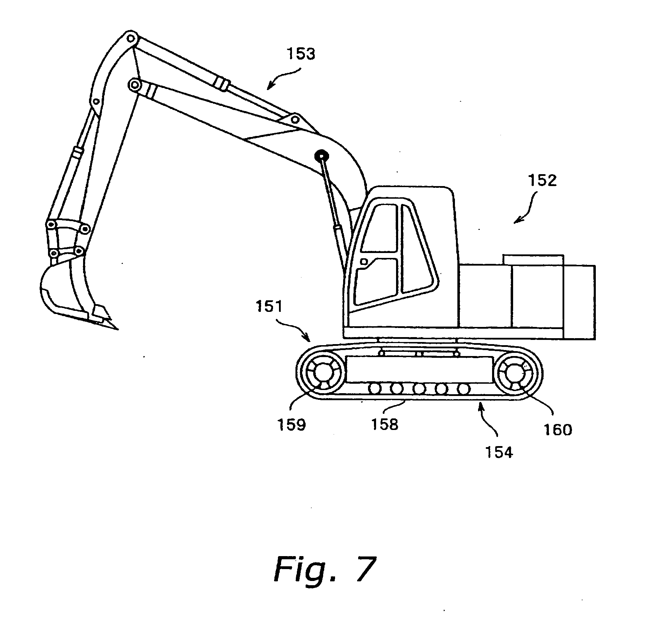

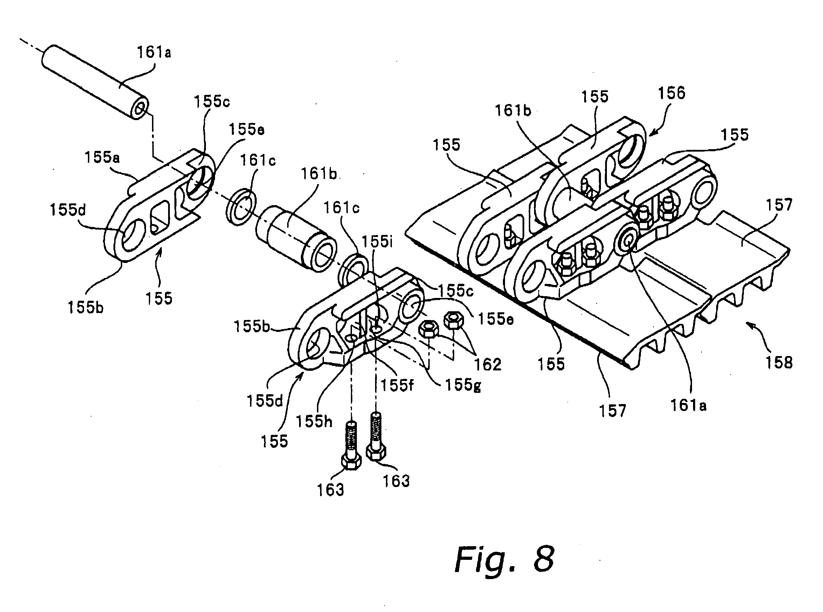

As shown in Figure **7,** a tracked work vehicle such as hydraulic excavators or the like includes a lower machinery **151,** a superstructure **152,** and a work implement **153** connected to the superstructure **152.** The lower machinery **151** includes a crawler belt device **154** which serves as a travel device (undercarriage). As shown in Figure **8,** in the crawler belt device **154,** typically, a pair of right and left links **155** are placed such that two ends of the one oppose those of the other with a space interposed therebetween when viewed from a traveling direction, and are coupled with a coupling member **161** including a coupling pin **161a,** a bushing **161b,** ring bodies **161c** and the like to form an endless link chain **156.** To a receiving surface of each of the pair of the right and left links **155** of the link chain **156** on the ground side (shoe plate receiving surface) , a shoe plate **157** is fixed to form a set of a crawler belt **158** (see Japanese Laid-Open Publication No. 2001-347972). The crawler belt **158** is wound around an idler **159** and a crawler belt sprocket **160** to form the lower machinery **151.**

As shown in Figure **8,** the right and left links **155** have left-right symmetric shapes and structures. Two rectangular plates are shifted from one another in a longitudinal direction and laminated. The integrated central portion forms a thick portion **155a** and thin portions **155b** and 155c on the ends respectively include press fitting holes **155d** and **155e** for press fitting ring bodies **161c** and the bushing **161b** so as to penetrate through. The central thick portion **155a** includes a pair of front and rear cavities **155f** and **155g** for placing nut members **162** so as to penetrate through, similarly. On the bottom of the cavities **155f** and **155g,** bolt insertion holes **155h** and **155i** for inserting bolt members, which are not shown, are formed so as to penetrate vertically.

A coupling member **161** couples not only the right and left links **155** but also links **155** adjacent to each other in a longitudinal direction. Such a coupling member **161** includes a coupling pin **161a,** a bushing **161b** fitted onto a central portion of the coupling pin **161a,** and the above-mentioned ring bodies **161c** which are press fitted into the press fitting holes **155d** and **155e** formed on both ends of each of the links **155.** The both ends of the coupling pin **161a** are respectively inserted into the ring bodies **161c** such that the coupling pin **161a** is inserted across the entire length of the bushing **161b** to form the above-mentioned link chain 156. Each of the right and left links **155** of the link chain **156** formed in this way has an external surface which serves as a shoe plate receiving surface. On the shoe plate surface, the shoe plate **157** is fixed the bolt members **163** and the nut members **162** placed inside the cavities **155f** and **155g.** A roller such as an idler rolls and travels on a surface opposite to the shoe plate receiving surface.

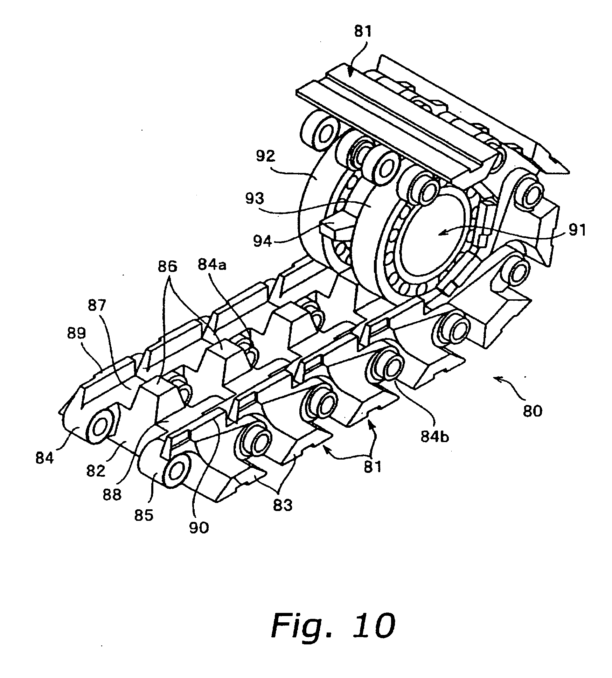

For example, Japanese Laid-Open Publication No. 7-187030 discloses a track assembly having a structure which is completely different from the structure described above as shown in Figure **10.** The track assembly is formed of an endless track chain **80,** which is formed by coupling a plurality of track links **81,** and a crawler belt sprocket wheel **91.** A track link **81** has a link main body **82,** a shoe plate portion **83** having a ground engagement surface and a travel surface, a pair of right and left hinge members (hinge portions) **84** and **85** which couple track links **81** adjacent to each other. The components are cast integrally. The track link **81** has a driving cam **86** protrude from a central portion of the surface, travel planes **87** and **88** for a pair of right and left travel rims **92** and **93** on the sides of a sprocket wheel **91,** and right and left guides **89** and **90** for guiding external surfaces of a travel rims **92** and **93.** The sprocket wheel **91** which operates in cooperation with the track link **81** includes the above mentioned two travel rims **92** and **93** which are separated in a lateral direction, and a plurality of drive teeth **94** which are separated from each other in a circumferential direction and can engage to the driving cam **86** of the track link **81.** As the sprocket wheel **91** rotates, the drive teeth **94** of the sprocket wheel **91** engage to the driving cam **86** of the track link **81** to have the endless track chain rotate.

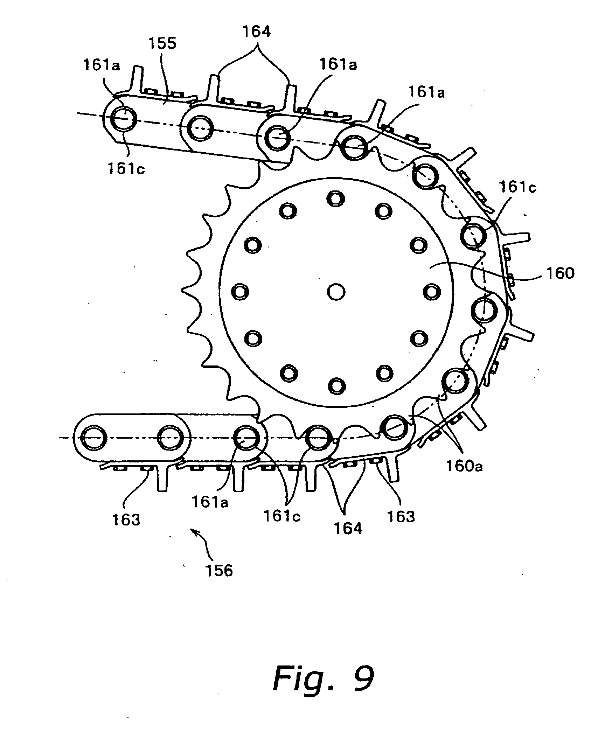

As described above, the conventional crawler belt device shown in Figure **8** includes a large number of components, and thus, an assembling operability has been poor. Since the number of components is large, the cost is high, and the inventory control of the components was cumbersome. Further, as shown in Figure **9,** the bushing **161b** is fitted onto the coupling pin **161a,** which is a part of the coupling member **161,** are fitted to sprocket teeth **160a** of the crawler belt sprocket **160.** Thus, the coupling member **161** receives a sprocket load, so the coupling member **161** has to have a sufficient strength. For securing such a strength, the cross sectional area of the link has to be increased. As a result, total cubic capacity and weight increase. Moreover, when the crawler belt sprocket **160** engages or disengages, the center of link motion is a center of axis of the coupling member **161.** This brings the bushing 161b of the coupling member into sliding contact with the sprocket teeth **160a** of the crawler belt sprocket **160.** Abrasion due to such sliding contact causes damages of the bushing **161b** in early stage, and the durability deteriorates. Usually, links are produced by casting for achieving a predetermined strength. However, production by casting requires a number of process steps, and thus, equipment cost surges.

The track assembly shown in Figure **10** includes components formed of a single casting. In general, castings can be readily crushed or broken due to an impact load or bending load. Since the track assembly has the track links **81** being coupled by the hinge members **84** and **85,** the track links **81** integrated to the shoe plate can be readily broken due to a twist by running on an unleveled ground or a bending load. Thus, each member is reinforced, resulting the device to be large.

US 2003/141760A1 and JP H09-290778A disclose crawler belt link structure comprising a pair of right and left link portions respectively having first and second penetration holes on front and rear ends, and a first coupling portion for communicating and coupling the first penetration holes of the pair of the link portions.

US 2003/141760 A1 shows a crawler belt link structure forming the precharacterising part of claim 1. The first coupling portion is tubular and serves as a center for bending adjacent crawler belt link structures when the link chain is engaged with a sprocket. Further, the known crawler belt link structure has a second coupling portion for central portions of the pair of the link portions in a longitudinal direction. The second coupling portion is a beam rigidly joining the pair of right and left link portion by a press fit. The first coupling portion has an outer rotary bushing for a direct engagement with the sprocket so that the power of the sprocket is transmitted through rotary bushings to coupling pins of the first coupling portion.

The present invention is provided to solve the conventional problems described above, and an object thereof is to provide a crawler belt link structure having a small number of components with which a link chain can be readily assembled and which also secures predetermined strength and hardness with high durability, and a crawler belt link chain obtained by coupling the same.

DISCLOSURE OF THE INVENTION

For achieving this object, the invention provides a crawler belt link structure having the features of claim 1.

Advantageous embodiments form the subject matters of the sub claims.

Especially, there is provided a pair of right and left link portions respectively having first and second penetration holes on front and rear ends; a tubular first coupling portion for communicating and coupling the first penetration holes of the pair of the link portions; and a second coupling portion for coupling central portions of the pair of the link portions in a longitudinal direction and being engaged to a sprocket.

With such a structure, the tubular first coupling portion integrally couples between the first penetration holes of the right and left link portions and the second coupling portion integrally couples the central portions of the link portions. Thus, sufficient rigidity and durability compared to those of a conventional crawler belt link member can be secured.

A crawler belt link structure of the second invention is formed by integrally forming: a pair of right and left link portions respectively having first and second penetration holes on front and rear ends; a tubular first coupling portion for communicating and coupling the first penetration holes of the pair of the link portions; and a second coupling portion for coupling central portions of the pair of the link portions in a longitudinal direction.

With such a structure, the right and left link portions and the first and second coupling portions are integrally formed for production. Thus, it is no longer necessary to produce the right and left links, or bushes for coupling them separately. Also, an assembling operation of the link structure can be simplified. As a result, rigidity and strength as the link structure can be secured. A cross sectional area of the link structure can be reduced. Thus, a volume of the entire link structure, particularly, a height in a vertical direction can be reduced.

A crawler belt link structure of the third invention is a crawler belt link member of the first or the second invention in which, when a radius of a circumscribed circle, which is a circle concentric with a circle passing through centers of the first and the second penetration holes and having a center of rotation of a sprocket to be engaged as a center and which inscribes an outer periphery of the first coupling portion on a roller tread side, is Rb, a top portion of the second coupling portion on the side to be engaged to the sprocket is positioned between the roller tread of the link portion and the circumscribed circle of the radius Rb.

With such a structure, only the second coupling portion engages to engagement teeth of the sprocket, and the first coupling portion is in a non-contact state. Thus, abrasion due to sliding and contact of the first coupling portion with respect to the sprocket can be avoided in order to further improve the durability.

The above-described object can be effectively achieved by a crawler belt link structure including: a pair of right and left link portions respectively having first and second penetration holes on front and rear ends; a tubular first coupling portion for communicating and coupling the first penetration holes of the pair of the link portions; and a solid second coupling portion for coupling central portions of the pair of the link portions in a longitudinal direction, which is a basic structure of the present invention.

It is desirable that the pair of the link portions and the first and the second coupling portions are integrally formed, i.e., integrally cast. It is also preferable that, when a radius of an arc which passes through centers of the first and the second penetration holes is Ra, a radius of a circumscribed circle which is a circle concentric with the circle of radius Ra and inscribes an outer periphery of the roller tread side is Rb, a distance between centers of the first and the second penetration holes is P1, and Z is odd number, the following expression (I)

$$Ra = (P1/2) \div \sin(360/Z) \ldots (I)$$

is satisfied, and
a top portion of the second coupling portion on the roller tread side is positioned between a surface of the link portion on the roller tread side and the circumscribed circle of the radius Rb. Further, an end surface of the second coupling portion on a shoe plate side is extended to a position of the shoe plate receiving surface.

It is desirable that at least surfaces of both end portions of the first penetration holes are treated with a hardening treatment. It is also preferable that ring bodies formed of a material harder than that of the pair of the link portions are press fitted into the first penetration holes. From the similar reason, it is preferable that at least a surface of the arc cross sectional portion of the second coupling portion is treated with a hardening treatment. A typical form of use of the link structure obtained in this way is a crawler belt link chain formed by coupling the link structures with pins and a seal member is preferably provided in surrounding portions of the first or the second penetration holes.

According to the basic structure of the present invention, the tubular first coupling portion couples between the first penetration holes of the right and left link portions and the solid second coupling portion integrally couple the central portions of the link portions. Thus, rigidity can be secured sufficiently. If at least inner surfaces of both end portions of the first penetration holes are treated with a hardening treatment, by press fitting ring bodies made of a hard material, anti-abrasion property, strength and the like required in between the coupling pins can be further secured. Further, when the right and left link portions and the first and second coupling portions are produced by integral forming, it is no longer necessary to produce the right and left links and bushings for coupling them separately. An assembling operation for the link structure can be simplified. In this way, if a hardening treatment is carried out for a portion which requires it, all the rigidity, strength, and hardness required for link structure can be secured. A cross sectional area of the link structure can be reduced. Thus, a volume of the entire link structure, particularly, a height in a vertical direction can be reduced.

In the present invention, when a radius of an arc which passes through centers of the first and the second penetration holes is Ra, a radius of a circumscribed circle which is a circle concentric with the circle of radius Ra and inscribes an outer periphery of the first coupling portion on the roller tread side is Rb, a distance between centers of the first and the second penetration holes is P1, and Z is odd number, the following expression: $Ra = (P1/2) \div \sin(360/Z)$ is satisfied, and also, a top portion of the second coupling portion on the roller tread side is positioned between a surface of the link portion on the roller tread side and the circumscribed circle of the radius Rb. As long as these conditions are satisfied, for example, when a link chain formed by coupling the above link structures with pins is wound around an idler and a crawler belt sprocket and the sprocket is driven to rotate, sprocket teeth do not engage to coupling portions which couple front and rear end portions of right and left links in a longitudinal direction as in a conventional example, and only the solid second coupling portion for coupling central portions of the link structure engages. Thus, the second coupling portion receives the entire sprocket load, and the hollow first coupling portion does not receive the load at all.

Therefore, even when the first coupling portion is a tubular casting, the strength is sufficient. Since the second coupling portion is cast solid, the strength is sufficient as long as a required cross section is secured. However, hardness of the surface is insufficient and it may be worn out rapidly without any process. Thus, as described above, a surface of the top portion of the second coupling portion may be treated with a hardening treatment such as a nitriding process. When a link chain is assembled by coupling the link structures of the present invention which have the above-described structure one after another with coupling pins, as long as a seal member is provided in a surrounding portion of the first or the second penetration holes, refuse, soil, sand and the like or any type or liquid can be prevented from entering thereto.

The link chain according to the present invention is assembled by inserting end portions of the right and left link portions of the first penetration hole side of a link structure of the present invention between end portions of the right and left link portions on the second penetration hole of another link structure, press-fitting a coupling pin from aside one of the right and left second penetration holes, inserting the coupling pin through the tubular first coupling portion via a ring body which is previously press fitted to the first penetration hole, and press fitting the pin to the other second penetration hole. In other words, when assembling the link chain using the link structures of the present invention, only an operation of press fitting the coupling pins to the second penetration holes is required.

BRIEF DESCRIPTION OF THE DRAWINGS

Figure **1** is an outside view of a crawler belt link structure which is a typical embodiment of the present invention.

Figure **2** is a top cross sectional view of the link structure.

Figure **3** is side view of the link structure.

Figure **4** is an exploded perspective view showing an important part of a crawler belt device using the link structure.

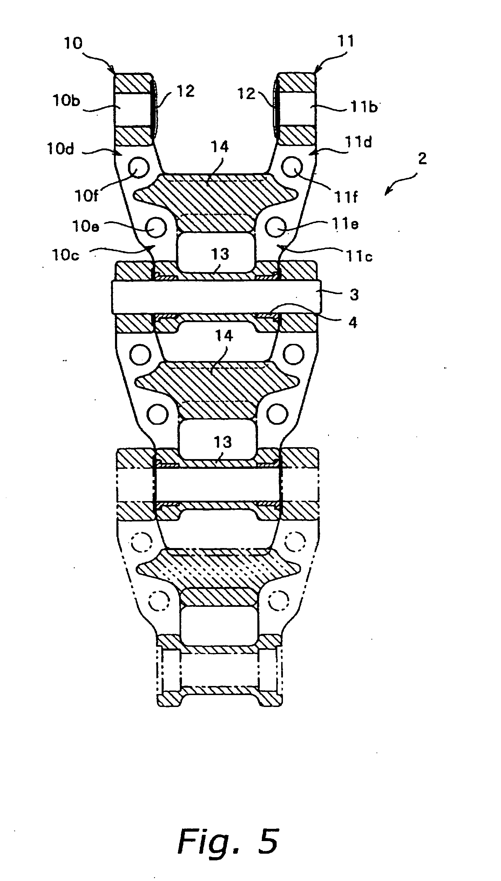

Figure **5** is a top cross sectional view showing a part of a link chain formed by coupling the above crawler belt link structure.

Figure **6** is a vertical cross sectional view partially showing engagement with a sprocket of the crawler belt device.

Figure **7** is simplified side view of a construction machine which employs a crawler belt device.

Figure **8** is an exploded perspective view showing an important part of a conventional crawler belt device.

Figure **9** is a side view partially showing engagement with a crawler belt sprocket of the conventional crawler belt device.

Figure **10** is a perspective view showing an important part of another conventional crawler belt device.

DESCRIPTION OF REFERENCE NUMERALS

| 1 | Crawler belt link structure (link structure) |
|---|---|
| 1a | First link structure |
| 1b | Second link structure |
| 10,1 | Right and left link portions |
| 10a, 11a a | First penetration holes |
| 10b ,11b | Second penetration holes |
| 10c,10d; 11c, 11d | Hollows |
| 10e, 10f; 11e, 11f | Bolt penetration holes |
| 12 | Seal member |
| 13 | First coupling portion |
| 14 | Second coupling portion |
| 2 | Link chain |
| 3 | Coupling pin |
| 4 | Ring body |
| 4a | Bushing |
| 52 | Crawler sprocket (sprocket) |
| 52a | Engagement teeth |
| 6 | Shoe plate |
| 6a | Recessed groove |
| 6b | Notch groove |
| 6c,6d | Soil discharging holes |
| 61 | Bolt member |
| 62 | Nut member |
| 80 | Track chain |
| 81 | Track link |
| 82 | Link main body |
| 83 | Shoe plate portion |
| 84,85 | Hinge members (Hinge portions) |
| 86 | Driving cam |
| 87,88 | Travel planes (of travel rim) |
| 89,90 | Right and left guides |
| 91 | Sprocket wheel |
| 92,93 | Travel rim |
| 94 | Drive teeth |

| 151 | Lower machinery |
| 152 | Superstructure |
| 153 | Work implement |
| 154 | Crawler belt device |
| 155 | Link |
| 155a | Thick portion |
| 155b,155c | Thin portions |
| 155d,155e | Press fitting holes |
| 155h,155i | Bolt insertion holes |
| 156 | Link chain |
| 157 | Shoe plate |
| 158 | Crawler belt |
| 159 | Idler |
| 160 | Crawler belt sprocket |
| 161 | Coupling member |
| 151a | Coupling pin |
| 161b | Bushing |
| 161c | Ring body |
| 162 | Nut member |
| 163 | Bolt member |
| 164 | Shoe plate |

BEST MODE FOR CARRYING OUT THE INVENTION

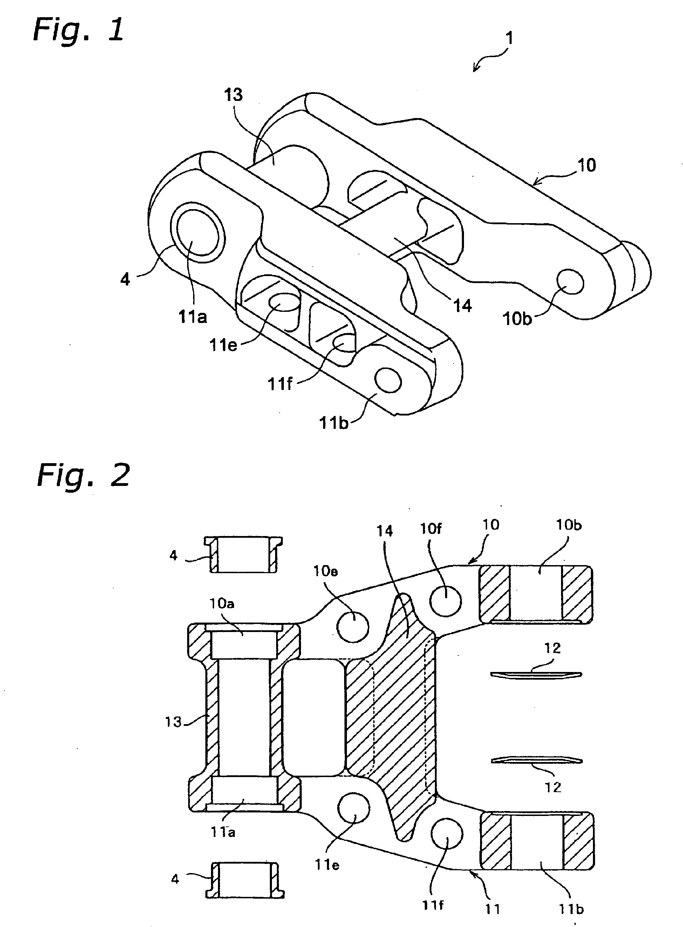

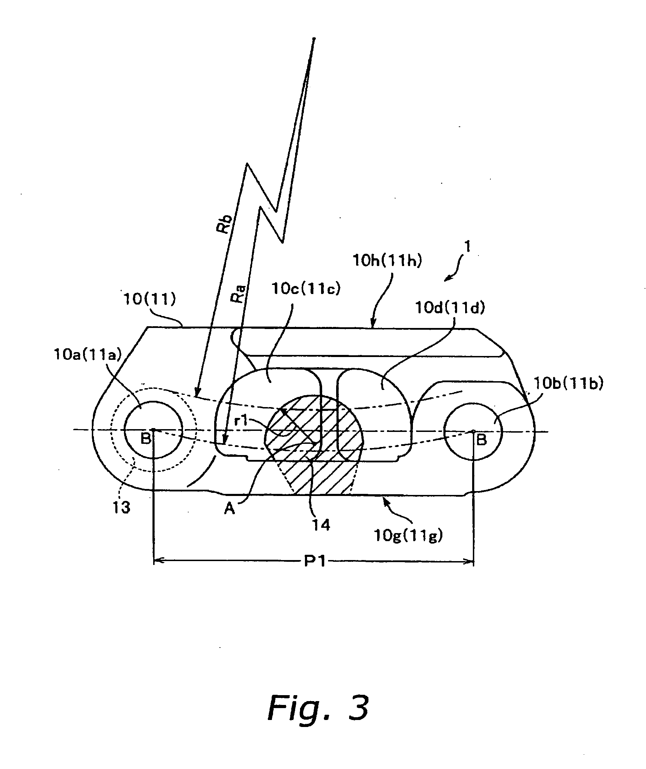

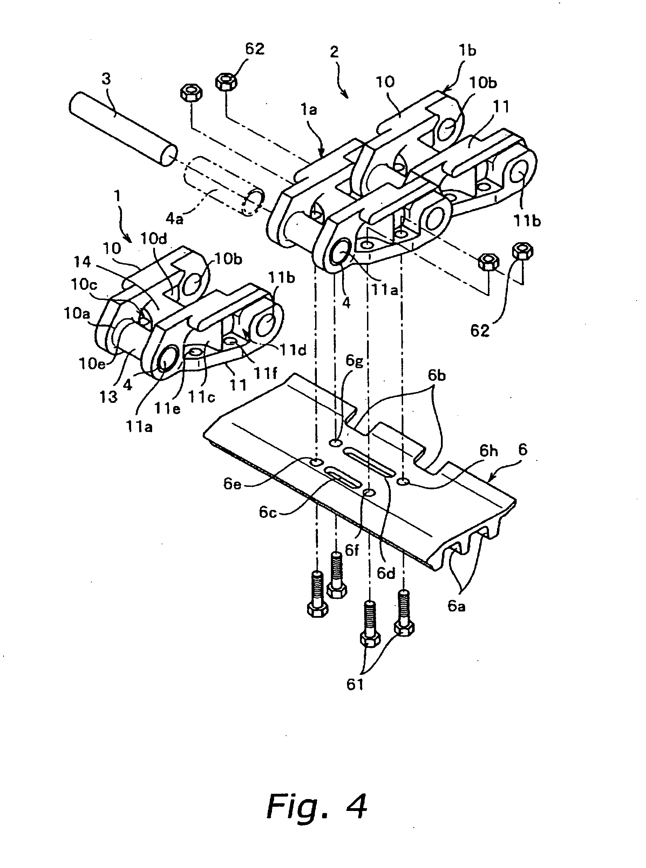

Hereinafter, crawler belt link structure and a crawler belt link chain formed by coupling the same, which are typical embodiments of the present invention, will be described specifically with reference to the drawings. Figures **1** through **3** show a crawler belt link structure according to the present embodiment. Figure **4** is an exploded perspective view showing an important part of a crawler belt device using the crawler belt link structure. The crawler belt device is used as a lower machinery **151** of a construction machine such as a hydraulic excavator as shown in Figure **7.** In the following description, a side to which shoe plates of the link structures are fixed, as shown in a side view of Figure **3,** is referred to as a lower side; and an upper side of the link structure as shown in Figure **3** is referred to as an upper side. Also, in the following description, the right direction is an upward direction and the left direction is the downward direction with respect to the link structure as shown in a transverse cross sectional view in Figure **2.**

A crawler belt link structure (link structure) **1** includes right and left link portions 10 and **11,** a first coupling portion **13,** and a second coupling portion **14.** The right and left link portions **10** and **11** have a structure of plane symmetry similar to that of the conventional right and left links. The first coupling portion **13** couples between end portions (first end portions) on the side in which are to be plugged into a link chain **2** formed by coupling the link structures **1** as shown in Figure **4.** The second coupling portion **14** couples central portions of the right and left link portions **10** and **11** in a longitudinal direction. The right and left link portions **10** and **11** and the first and second coupling portions **13** and **14** are formed integrally by casting.

The first coupling portion **13** couples the first end portions of the right and left link portions **10** and **11** integrally, and is formed of a hollow cylindrical member. An inner diameter of the first coupling portion **13** is slightly larger than an outer diameter dimension of a coupling pin **3** which connects the link structures **1** in series along the longitudinal direction. This allows the coupling pin **3** to be inserted therein, and to relatively rotate around an axis in the first coupling portion **13.** On the first end portions of the right and left link portions **10** and **11,** first penetration holes **10a** and **11a** which communicate with the hollow portion of the first coupling portion **13** are formed. As shown in Figure **4,** to the first penetration holes **10a** and **11a,** ring bodies **4** formed of a material harder than the cast steel, for example, CrB steel, Cr steel or the like, are press fitted. An inner diameter of the ring bodies **4** is equal to the inner diameter dimension of the hollow portion of the first coupling portion **13.** Alternatively, as indicated by phantom lines in Figure **4,** a bush **4a** may be press fitted to the inner peripheral surfaces of the first penetration holes **10a** and **11a** and the first coupling portion **13** instead of the ring bodies **4.**

On second end portions, which are end portions of the right and left link portions 10 and **11** on the opposite side to the first end portions, second penetration holes **10b** and **11b** are formed. An inner diameter of the second penetration holes **10b** and **11b** is equal to the outer diameter dimension of the coupling pin **3** because both ends of the coupling pin **3** are directly press fitted thereto. For coupling the link structures **1,** as shown in Figure **2,** seal members **12** formed of a belleville spring or the like may be attached near opposing ends of the second penetration holes **10b** and **11b.** Between the first penetration holes **10a** and **11a** and the second penetration holes **10b** and **11b** of the right and left link portions **10** and **11,** pairs of hollows **10c** and **10d; 11c** and **11d** which penetrate in a horizontal direction are formed. On bottom portions of the hollows **10c** and 10d and **11c** and **11d**, bolt penetration holes **10e, 10f, 11e** and **11f** which penetrate in a vertical direction are formed. Through the bolt penetration holes **10e, 10f, 11e** and **11f,** bolt members **61** for fixing the shoe plates **6** to the link structures **1** are inserted. On the bottom surfaces of the hollows **10c** and 10d and **11c** and **11d,** nut members **62** which are to be threadably engaged to the bolt members **61** are interposed.

The second coupling portion **14** which couples and integrates the central portions of the right and left link portions **10** and **11** in the longitudinal direction has a solid structure as described above. As shown in Figure 3, an upper surface of an upper half has an arc cross sectional shape of a semicircular shape, and a lower half has a cross section of a reversed trapezoid which extends from the arc cross section to the fixing plane of the shoe plate **6**. In the present invention, the second coupling portion **14** is the most important component. Particularly, the shape of the cross section of the upper half and the arrangement affects whether the function of the present invention work or not.

According to the present invention, when a radius of an arc which passes through centers of the first and second penetration holes **10a, 11a, 10b** and **11b** is Ra, a radius of a circumscribed circle which is a circle concentric with the circle of the radius Ra and inscribes an outer periphery of the first coupling portion **13** on the side opposite to shoe plate receiving surfaces **10g** and **11g** (roller tread side) is Rb, a distance between centers of the first and the second penetration holes is P1, and the minimum number of the current teeth, 17, is Z, the following equation (I) Ra = (P1/2) ÷ sin(360/Z) ...... (I) is satisfied.

The track roller wheel tread refers to a plane of the crawler belt link structure **1** on which rollers such as an idler roll and travel when the construction machine is running with the lower machinery **151**.

Meanwhile, a top portion of the second coupling portion **14** on the side (track roller wheel tread side) opposite to the shoe plate receiving surfaces **10g** and **11g** (track roller wheel tread side) is placed between surfaces **10h** and **11h** (track roller wheel tread side) of the link portions **10** and **11** on the side opposite to the shoe plate receiving surface **10g** and 11g and the circumscribed circle having the radius Rb. Further, since an end portion of the second coupling portion **14** on the side of the shoe plate is extended to the shoe plate receiving surfaces **10g** and **11g,** a load generated at the top portion of the second coupling portion **14** is efficiently transmitted to the shoe plate.

As long as such a structure is employed, for example, when the link chain **2** formed by coupling the above link structures **1** are wound around the idler **159** and the sprocket **160** of a construction machine or the like and the sprocket **160** is driven, the link chain **156** engages to the sprocket **160** when it rotates. In such a process, the first coupling portion **13** is not in contact with sprocket teeth, and only an arc cross section portion of the second coupling portion **14** is in contact with the sprocket teeth. In order to prevent abrasion due to such a contact, the arc surface of the second coupling portion **14** is treated with a surface hardening treatment such as a nitriding process and the like.

As shown in Figure **4,** the link chain **2** is assembled by inserting end portions of right and left link portions **10** and **11** of a first link structure **1a** on the side of the first penetration holes **10a** and **11a** between end portions of the right and left link portions **10** and **11** of another second link structure **1b** on the side of the second penetration holes **10b** and **11b.** The coupling pin **3** is press fitted from outside of either one of the second penetration holes **10b** and **11b** on the right and left sides of the second link structure **1b**. The coupling pin **3** is inserted into one of the ring bodies **4** which is previously press fitted to the first penetration hole **10a** or **11a,** and inserted through the tubular first coupling portion **13** via the ring body **4**. Then, the coupling pin **3** is press fitted to the other of the second penetration holes **10b** and **11b** on the other side via the other ring body **4** of the second penetration holes **10b** and **11b** to complete assembling. In order to prevent plastic deformation due to press fitting the ring bodies 4, inner surfaces of at least both end portions of the first penetration holes **10a** and **11a** are treated with a hardening treatment to improve hardness of the inner surfaces.

For assembling the link chain with the link structure according to the present invention, only a simple operation of press fitting a coupling pin into the second penetration holes **10b** and **11b** is required. Moreover, since all of the coupling pins **3** can have the same size, the manufacturing cost can be reduced and parts management becomes easy. Instead of the first coupling portion **13,** a bush **4a** as indicated by phantom lines in Figure **4** may be press fitted to the first penetration holes **10a** and **11a** through which the coupling pin **3** is inserted. In such a case, it is no longer necessary to form ring body press fitting holes inside the first penetration holes **10a** and **11a**. The bush **4a** is preferably a bush which is quenched to be HRC **45** or higher. Thus, the hardness of the inner diameter of the first coupling portion **13** is also secured, for example, and durable and stable coupling becomes possible.

To the shoe plate receiving surface of each of the link structures **1** of the link chain **2** assembled in this way, a shoe plate **6** formed of a rectangular flat plate is fixed. As shown in Figure **4,** the shoe plate **6** includes a pair of recessed grooves **6a** parallel to a longitudinal direction which are formed on a ground engaging plane, and a pair of separated notch grooves **6b** which are formed in a central portion of one side. Further, soil discharging holes **6c** and **6d** are formed in central portions of the bottoms of the recessed grooves **6a**. A total of four bolt penetration holes **6e** through **6h** are formed respectively at positions corresponding to the bolt penetration holes **10e, 10f, 11e,** and **11f** of the right and left link portions **10** and **11** in front and in the rear of the soil discharging holes **6c** and **6d** in the longitudinal direction. The shoe plate **6** is fixed such that the recessed grooves **6a** face the ground and are orthogonal to the right and left link portions **10** and **11**. For fixing, the bolt penetration holes **6e** through **6h** of the shoe plate **6** are placed in accordance to the bolt penetration holes **10e, 10f, 11e,** and **11f** of the right and left link portions **10** and **11**. Then, bolt members **61** are penetrated through the bolt penetration holes **6e** through **6h** of the shoe plate **6** and the bolt penetration holes **10e, 10f, 11e,** and **11f** of the right and left link portions **10** and **11,** and are screwed into nut members **62** mounted to the four hollows **10c, 10d, 11c** and **11d** of the right and left link portions **10** and **11.** The second coupling portion **14** of the link structure **1** is placed between the soil discharging holes **6c** and **6d** so that they do not interfere the recessed grooves **6a** and the bolt penetration holes **6e** through **6h** of the shoe plate **6.**

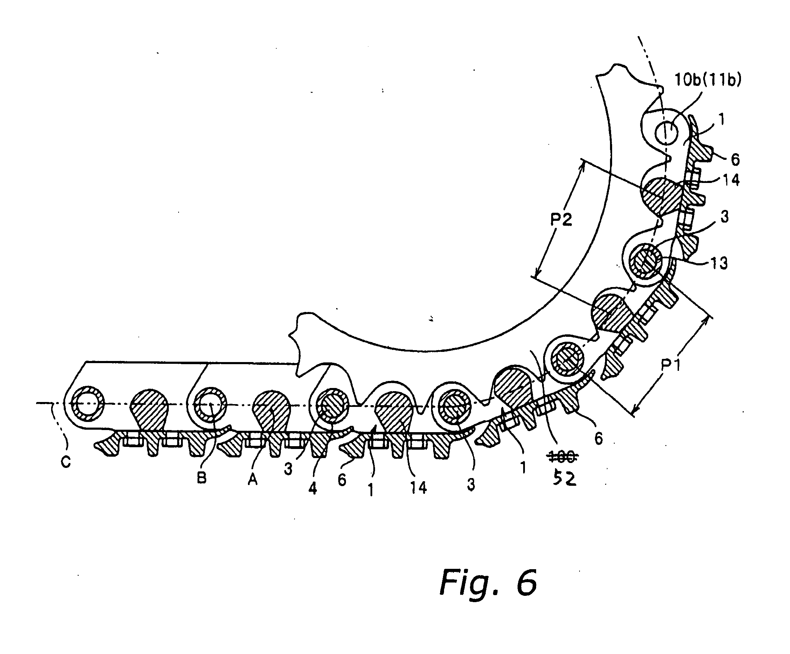

The link chain **2** formed by coupling the link structures **1** according to the present embodiment which has a structure as described above is wound around an idler and a sprocket **52** of construction machine or the like which are not shown (see Figure **6**). When the sprocket **52** is driven, the link chain **2** engages to the sprocket **52** as it rotates. The engagement between the link structures 1 and the sprocket **52** will be considered.

Figure **6** shows engagement between the link chain **2** and the sprocket **52.** A plurality of the link structures **1** are coupled endlessly to form the link chain **2.** Before the link chain **2** is engaged to the sprocket **52,** it is linear, But once the link chain **2** is engaged to the sprocket **52,** the link structure **1** bends with the coupling pin **3** of the first coupling portion **13** being a center. A distance between the first coupling portions **13** adjacent to each other (pitch **P1** between the coupling portions) is always constant. A distance between the centers of arcs of arc cross sectional portions of the first coupling portions **13** adjacent to each other where the chain and the sprocket do not engage, is equal to the engagement pitch **P1** and is constant. However, a distance between centers of the pins of the second coupling portions **14** adjacent to each other at the engagement position (engagement pitch **P2**) becomes shorter by an amount of bending at the coupled portion. Thus, at the position of engagement to the sprocket, only the arc surfaces of the second coupling portions **14** are engaged to the engagement teeth **52a** of the crawler sprocket **52,** and the first coupling portions **13** can maintain a non-contact state, which means that they are lifted from the engagement surface of the engagement teeth **52a** of the crawler sprocket **52.**

On the other hand, as shown in Figure **8,** the conventional link structures are integrally coupled by combining the coupling member, i.e., the coupling pins **161a,** the bushings **161b,** and ring bodies **161c,** respectively between both end portions of the right and left links **155** and **155** in the longitudinal direction. Thus, when the crawler link chain is wound around the sprocket **160** and an idler (not shown) as shown in Figure **9** and is driven to rotate, the bushings **161b** always engage to and support the sprocket **160** at the engagement position with the sprocket **160.** The coupling members receive the entire sprocket load.

In the crawler device using the link structures of the present invention which have the structure as described above, unlike the conventional example, the pair of right and left link portions **10** and **11** originally facing each other are coupled integrally by casting with the first and the second coupling portions **13** and **14** when the crawler device is assembled. Thus, it is only necessary to couple the pairs of the right and left link portions **10** and **11** which have been integrated with the same type of coupling pins **3** one after another along a longitudinal direction. The assembling operation can be simplified. The link structure **1** and the crawler sprocket **52** are in contact such that only the second coupling portions **14** having a solid structure which couples the right and left link portions **10** and **11** in the central portions are in contact with the engagement teeth of the crawler sprocket **52.** Hollow first coupling portions **13** do not receive the sprocket load, and the entire load is received by the second coupling portions **14.** Thus, the link structure **1** can achieve a necessary and sufficient strength. Regarding the first coupling portions **13,** it is only necessary to maintain the strength sufficient for receiving a tensile force generated while the link chain **2** is running, and to have a bending function for engagement between the link chain **2** and the crawler sprocket **52.** Thus, a necessary strength can be achieved with a hollow structure, and durability of the entire crawler belt can be improved significantly.

Further, since the first coupling portions **13** is not in contact with the engagement teeth **52a** of the crawler sprocket **52,** abrasion due to sliding contact of the first coupling portions 13 with respect to the crawler sprocket **52** can be avoided. Thus, durability can be further improved. Moreover, the pitch **P1** between the coupled portions of the first coupling portions **13** adjacent to each other in the longitudinal direction becomes larger than the engagement pitch **P2** between the centers of the arc portions of the second coupling portions **14** at the sprocket engagement position. Thus, when the crawler belt device of the present embodiment and a conventional crawler belt device (for example, the crawler belt device shown in Figure **9**) are compared, provided that the construction machines are of the same type and have the same size, the length of the right and left link portions **10** and **11** in the longitudinal direction according to the present embodiment can be longer than that in the conventional example. If the lengths are the same, the height of the right and left link portions **10** and **11** in a vertical direction can be reduced. In this way, the number of the right and left link portions **10** and **11** used can be decreased. The number of times of operations of coupling links can be reduced, and assembling workability is improved.

Since the shoe plates **6** can be exchangeably fixed to the shoe plate receiving surfaces **30** of the link structures **1,** only the shoe plate **6** which is damaged most may be exchanged in order to improve the durability of the link chain **2.** Further, since the second coupling portions **14** do not interfere the soil discharging holes **6c** and **6d** of the shoe plates **6,** soil, sand and the like can be discharged from a space between the shoe plates **6** and the right and left link portions **10** and **11** via the soil discharging holes **6c** and **6d.** Thus, the link chain **2** can be driven smoothly. As Z in expression (I), **17** is selected herein. However, the figure is not limited to 17, but may be any figure depending upon the number of teeth of the sprocket.

As is clear from the above description, according to the link structures of the present invention, the first and the second coupling portions for coupling a pair of right and left link portions are integrally formed by casting or the like, thus, the cost is reduced and the torsional rigidity is improved by integral forming to achieve a high quality as a product. Further, the second coupling portions are not involved directly in coupling the link structures adjacent to each other. Only the first coupling portions are used for coupling, and the second coupling portions are involved mostly in the engagement with the sprocket. This, coupled with the solid structure, secures the necessary and sufficient strength for the structure. Since the number of independent components before assembling which are adjacent to each other is small, the inventory control and the like can be lightened. Further, a pair of the right and left link portions and the shoe plate can be assembled and disassembled, the crawler belt device can be easily assembled, and when a shoe plate is damaged, or the like, the damaged shoe plate can be readily repaired, exchanged, or the like.

The link structure of the present invention has been described mainly with reference to the embodiment shown in the figures. However, the present invention is not limited to the above embodiment, and various modifications can be made without departing from the scope recited in the claims. For example, in the above embodiment, the link structure has the link portion and the shoe plate which can be assembled and disassembled. However, the link portion and the shoe plate may be formed integrally. Further, in the embodiment shown in the figures, the second coupling body has a cross sectional shape formed of an arc cross sectional portion and a reversed trapezoidal cross sectional portion. However, any other cross sectional shape may be employed.

INDUSTRIAL APPLICABILITY

A link chain obtained by assembling link structures of the present invention can be used for various construction equipments such as hydraulic excavators, bulldozers and the like, and further, for various agricultural machines such as rice harvesters and the like.

**Claims**

1. A crawler belt link structure (1) comprising:

    a pair of right and left link portions (10, 11) respectively having first and second penetration holes (10a, 11a, 10b, 11b) on front and rear ends; and
    a tubular first coupling portion (13) for communicating and coupling the first penetration holes (10a, 11a) of the pair of the link portions;
    a second coupling portion (14) for coupling central portions of the pair of the link portions in a longitudinal direction; **characterized in that** the first and second coupling portions (13, 14) are arranged such that, when a link chain (2) formed by coupling a plurality of such crawler belt link structures (1) engages a sprocket (52), the second coupling portion (14) is in contact with engagement teeth of the sprocket, and the first coupling portion (13) is not in contact with the sprocket teeth.

2. The crawler belt link structure (1) according to claim 1, wherein,
   when a radius of a circumscribed circle, which is a circle concentric with a circle passing through centers of the first and the second penetration holes (10a, 11a, 10b, 11b) and having the center of rotation of a sprocket to be engaged as a center and which inscribes an outer periphery of the first coupling portion (13) on a track roller wheel tread (10h, 11h) side, is Rb,
   a top portion of the second coupling portion (14) on the side to be engaged to the sprocket is positioned between the track roller wheel tread (10h, 11h) of the link portion and the circumscribed circle of the radius Rb.

3. The crawler belt link structure (1) according to claim 2, wherein,
   when a radius of an arc which passes through centers of the first and the second penetration holes is Ra, a distance between centers of the first and the second penetration holes is P1, and Z is the number of teeth (odd number) of the sprocket to be engaged, the following expression (1)

$$Ra = (P1/2) \div \sin(360/Z) \,\ldots\ldots\, (I)$$

is satisfied.

4. The crawler belt link structure (1) according to any one of claims 1 through 3, wherein an end surface of the second coupling portion (14) on a shoe plate (6) side is extended to a position of a shoe plate receiving surface (10g, 11g).

5. The crawler belt link structure (1) according to any one of claims 1 through 4, wherein at least inner surfaces of both end portions of the first penetration holes (10a, 11a) are treated with a hardening treatment.

6. The crawler belt link structure (1) according to any one of claims 1 through 5, wherein ring bodies formed of a material having hardness higher than that of the pair of the link portions are inserted into the first penetration hole s(10a, 11a).

7. The crawler belt link structure (1) according to any one of claims 1 through 6, wherein at least a surface of a top portion of the second coupling portion (14) is treated with a hardening treatment.

8. A crawler belt link chain (2) formed by coupling the crawler belt link structures (1) according to any one of claims 1 through 7 with pins.

9. The crawler belt link chain (2) according to claim 8, wherein a seal member (12) is provided in surrounding portions of the first or the second penetration holes.

10. The crawler belt link structure according to any one of claims 1 through 9, wherein the pair of the right and left link portions (10, 11), and the first and the second coupling portions are integrally formed.

11. Combination of a crawler belt link structure (1) according to any of the proceding claims and a sprocket (52).

**Patentansprüche**

1. Eine Laufkettengliedstruktur (1) umfassend:

    ein Paar rechte und linke Gliedbereiche (10, 11), die jeweils ein erstes und ein zweites Durchstoßloch (10a, 11a, 10b, 11b) an den vorderen und hinteren Enden aufweisen; und
    einen röhrenförmigen ersten Kopplungsbereich (13) zum Verbinden und Koppeln der ersten Durchstoßlöcher (10a, 11a) des Paares der Gliedbereiche;
    einen zweiten Kopplungsbereich (14) zum Koppeln zentraler Bereiche des Paares der Gliedbereiche in einer länglichen Richtung;
    **dadurch gekennzeichnet, dass** die ersten und zweiten Kopplungsbereiche (13, 14) derart angeordnet sind, dass wenn eine durch Koppeln einer Vielzahl solcher Laufkettengliedstrukturen (1) geformte Gliedkette (2) in einen Zahnkranz (52) eingreift, der zweite Kopplungsbereich (14) in Kontakt mit Eingriffzähnen des Zahnkranzes ist und der erste Kopplungsbereich (13) nicht in Kontakt mit den Zahnkranzzähnen ist.

2. Die Laufkettengliedstruktur (1) nach Anspruch 1, **dadurch gekennzeichnet, dass**
    wenn ein Radius eines umschriebenen Kreises, der ein Kreis ist, welcher konzentrisch mit einem Kreis, der durch die Mittelpunkte der ersten und zweiten Durchdringungslöcher (10a, 11a, 10b, 11b) führt und der als Mitte die Mittelachse eines einzugreifenden Zahnkranzes hat und der von Innen die äußere Peripherie des ersten Kopplungsbereichs (13) auf der Seite der Laufrollenlaufflächen (10h, 11h), tangiert, Rb ist,
    ein oberer Bereich des zweiten Kopplungsbereichs (14) auf der in Eingriff zu bringenden Seite des Zahnkranzes ist zwischen Laufrollenlauffläche (10h, 11h) des Kopplungsbereichs und dem den Radius Rb aufweisenden umschriebenen Kreis angeordnet.

3. Die Laufkettengliedstruktur (1) nach Anspruch 2, **dadurch gekennzeichnet, dass**
    wenn ein Radius eines Kreisbogens, der durch die Mitte der ersten und der zweiten Durchdringungslöcher führt, Ra ist, eine Entfernung zwischen den Achsen der ersten und der zweiten Durchdringungslöcher P1 ist, und wenn Z die Anzahl an Zähnen (ungerade Zahl) des in Eingriff zu bringenden Zahnkranzes ist, dann ist der nachfolgende Ausdruck (I)

$$Ra = (P1/2) \div \sin(360/Z) \dots (I)$$

erfüllt.

4. Die Laufkettengliedstruktur (1) nach einem der Ansprüche 1 bis 3, **dadurch gekennzeichnet, dass** eine Endfläche des zweiten Kopplungsbereichs (14) auf einer Seite der Fußplatte (6) bis zu einer Lage einer Fußplattenaufnahmefläche (10g, 11g) verlängert ist.

5. Die Laufkettengliedstruktur (1) nach einem der Ansprüche 1 bis 4, **dadurch gekennzeichnet, dass** wenigstens die Innenflächen beider Endbereiche der ersten Durchdringungslöcher (10a, 11a) mittels einer Härtebehandlung behandelt sind.

6. Die Laufkettengliedstruktur (1) nach einem der Ansprüche 1 bis 5, **dadurch gekennzeichnet, dass** Ringkörper, die aus einem Material gefertigt sind, das einen höheren Härtegrad aufweist als welches der Paare der Gliedbereiche, in den ersten Durchdringungslöchern (10a, 11a) eingebracht sind.

7. Die Laufkettengliedstruktur (1) nach einem der Ansprüche 1 bis 6, **dadurch gekennzeichnet, dass** wenigstens eine Fläche eines oberen Bereichs des zweiten Koppelbereichs (14) durch eine Härtebehandlung behandelt ist.

8. Eine Laufkettengliederkette (2), gebildet durch Kopplung der Laufkettengliedstruktur (1) nach einem der Ansprüche 1 bis 7 mittels Bolzen.

9. Die Laufkettengliederkette (2) nach Anspruch 8, wobei ein Verschlussteil (12) in den dem ersten und dem zweiten Durchdringungsloch umgebenden Bereichen bereitgestellt wird.

10. Die Laufkettengliedstruktur nach einem der Ansprüche 1 bis 9, wobei das Paar der rechten und linken Gliedbereiche (10, 11) und die ersten und zweiten Koppelbereiche einstückig gefertigt sind.

11. Kombination einer Laufkettengliedstruktur (1) nach einem der voranstehenden Ansprüche mit einem Zahnkranz (52).

**Revendications**

1. Une structure de maillon de chenille (1) comprenant:

une paire de parties maillons droit et gauches (10, 11) respectivement ayant un premier et un second trou de pénétration (10a, 11 a, 10b, 11b) dans les extrémités avants et arrières; et
une première partie tubulaire de couplement (13) pour raccorder et coupler les premiers trous de pénétration des paires de parties de maillons;
une seconde partie de couplement (14) pour coupler des parties centrales de la paire de parties maillons dans une direction longitudinale;
**caractérisé en ce que** la première et la seconde partie de couplement (13, 14) sont arrangés tels que, lorsque une chaîne de maillons (2) formée par couplement d'une pluralité de structures annulaires de chenille (1) est engrenée à un échelon (52), la seconde partie de couplement (14) est en contact avec des dents d'engrenage de la couronne dentée, et la première partie de couplement (13) n'est pas en contact avec les dents de la couronne dentée.

2. La structure de maillon de chenille (1) selon la revendication 1, **caractérisé en ce que**,
lorsque un rayon d'un cercle circonscrit, qui est un cercle concentrique avec un cercle passant à travers des centres des premiers et seconds trous de pénétration (10a, 11a, 10b, 11b) et ayant le centre de rotation d'une couronne dentée susceptible d'être engrenée comme centre et qui inscrit une périphérie extérieure de la première partie de couplement (13) du coté d'une surface de roulement d'un galet de guidage (10h, 11h), est Rb,
une partie supérieure de la seconde partie de couplement (14) du coté susceptible à être engrené à la couronne dentée est agencée entre la surface de roulement du galet de guidage (10h, 11h) de la partie maillon le cercle circonscrit par le rayon Rb.

3. La structure de maillon de chenille (1) selon la revendication 2, **caractérisé en ce que**,
lorsque un rayon d'un arc de cercle qui passe par les centres des premiers et seconds trous de pénétration est Ra, une distance entre les centres des premiers et seconds trous de pénétration est P1, et Z est le nombre de dents (nombre impair) de la couronne dentée susceptible à être engrenée, l'expression suivante (I)

$$Ra=(P1/2) \div \sin(360/Z) \ldots\ldots (I)$$

est satisfaite.

4. La structure de maillon de chenille (1) selon l'une des revendications 1 à 3, **caractérisé en ce que**, une surface extrême de la seconde partie maillon (14) du coté d'une plaque d'assise (6) est prolongée jusqu'à une position d'une surface de réception (10g, 11g) de la pâque d'assise.

5. La structure de maillon de chenille (1) selon l'une des revendications 1 à 4, **caractérisé en ce que**, au moins les surfaces intérieures des deux parties extrêmes des premiers trous de pénétration (10a, 11a) sont traitées avec un traitement de durcissement.

6. La structure de maillon de chenille (1) selon l'une des revendications 1 à 5, **caractérisé en ce que**, des corps annulaires formés d'un matériel plus dur que celui de la paire de parties maillons sont introduits dans les premiers trous de pénétration (10a, 11a).

7. La structure de maillon de chenille (1) selon l'une des revendications 1 à 6, **caractérisé en ce que**, au moins une surface d'une partie supérieure de la seconde partie de couplement (14) est traitée avec un traitement de durcissement.

8. La chaîne de maillon de chenille (2) formée en couplant les structures annulaires de chenille (1) selon l'une des revendications 1 à 7 avec des goujons.

9. La chaîne de maillon de chenille (2) selon la revendication 8, **caractérisé en ce que**, une pièce de colmatage (12) est agencée dans des parties environnant les premiers et seconds trous de pénétration.

10. La structure de maillon de chenille selon l'une des revendications 1 à 9, **caractérisé en ce que**, la paire de parties maillons droit et gauches (10, 11), et les premières et secondes parties de couplement sont formées d'une seule pièce.

11. Combinaison d'une structure de maillon de chenille (1) selon l'une des revendications précédentes et d'une couronne dentée (52)

*Fig. 1*

*Fig. 2*

Fig. 3

# Fig. 4

EP 1 834 863 B1

Fig. 5

16

*Fig. 6*

EP 1 834 863 B1

*Fig. 7*

Fig. 8

*Fig. 9*

## Fig. 10

## REFERENCES CITED IN THE DESCRIPTION

**Patent documents cited in the description**

- JP 2001347972 A
- JP 7187030 A
- US 2003141760 A
- JP H09290778 A
- US 2003141760 A1